(19) Europäisches Patentamt
European Patent Office
Office européen des brevets

(11) Publication number: 0 100 365 A1

(12) # EUROPEAN PATENT APPLICATION

published in accordance with Art. 158(3) EPC

(21) Application number: 82900387.0

(22) Date of filing: 08.02.82

Data of the international application taken as a basis:

(86) International application number: PCT/JP82/00036

(87) International publication number: WO83/02801 (18.08.83 83/19)

(51) Int. Cl.[3]: F 02 M 23/04
F 02 M 23/08

(43) Date of publication of application: 15.02.84 Bulletin 84/7

(84) Designated Contracting States: CH DE FR GB LI

(71) Applicant: HANAYA INC.
15-3 Toyotamakita 3-chome
Nerima-ku Tokyo 176(JP)

(72) Inventor: USUI, Kyoji
Hanaya Inc. 15-3 Toyotamakita 3-chome
Nerima-ku Tokyo 176(JP)

(72) Inventor: TAKAMATSU, Yasuhide
Hanaya Inc. 15-3 Toyotamakita 3-chome
Nerima-ku Tokyo 176(JP)

(72) Inventor: OMORI, Takayoshi
Hanaya Inc. 15-3 Toyotamakita 3-chome
Nerima-ku Tokyo 176(JP)

(74) Representative: Schmidt, Horst, Dr. et al,
Patentanwälte Pohlmann & Schmidt Siegfriedstrasse 8
D-8000 München 40(DE)

(54) **AIR SUPPLYING DEVICE FOR INTERNAL COMBUSTION ENGINE.**

(57) An air supplying device for an internal combustion engine, which has a first control valve controlled by atmospheric pressure, a second control valve controlled by the carburetor vacuum, both the first and second valves being disposed in series with one another in an air passage in such a manner that the downstream end of the air passage is communicated with the intake tube downstream of the carburetor of the engine. In this device, the air-fuel ratio of the fuel mixture gas for the engine is improved to improve the fuel consumption and to reduce the NOx, CO and HC of the exhaust gas.

FIG.1

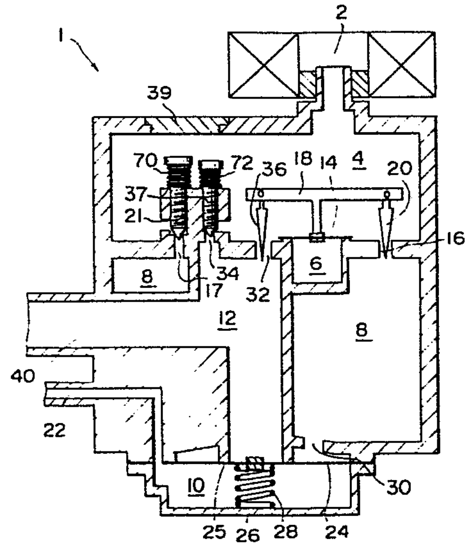


EP 0 100 365 A1

# SPECIFICATION

## TITLE OF INVENTION:

Air Supply Device for Internal Combustion Engine

## FIELD OF THE INVENTION:

This invention relates to an air supply device for an internal combustion engine and is designed to improve the fuel/air ratio of mixtured gas in an internal combustion engine.

## BACKGROUND OF THE INVENTION:

The internal combustion engine operates on the principle that a carburetor atomizes fossil fuels to produce mixtured gas which is forwarded to a cylinder to be ignited. It is known that the optimum condition of mixtured gas tends to suffer a change by the engine speed and the temperature of the internal combustion engine, as well as by the altitude where the internal combustion engine is located. The present inventor conducted an experiment in which the number of revolutions of an internal combustion engine was set at a uniform rate (3000 rpm), while the altitude was altered. The following measurments are the results of said experiment which shows the relationship between the altitude and the manifold boost pressure.

| Altitude | Manifold boost pressure |
|---|---|
| 2400 m | 385 mmHg |
| 1730 | 420 |
| 1590 | 440 |
| 1000 | 465 |

The results thus obtained leads to the conclusion that atmospheric pressure of the place where internal combustion engine is located alters the condition of mixtured gas in internal combustion engines.

According to the prior art, jet engines that use electronic fuels are provided with an altitude compensating controller which operates on the basis of absolute pressure. The altitude compensating controller which adjusts air bleeder by vacuum bellows is incorporated into the carburetor. However such controllers as mentioned above are expensive.

- It is also uneconomical to change a finished internal combustion engine by making use of the aforementioned method.

Also, for the method to decrease NOx contained in the exhaust gas, it is reported that combustion which occurs in a high temperature generates a large amount of NOx; NOx is mainly generated in the center of combustion chamber where gets a high temperature. Namely, combustion performed within an engine where a high pressure exists causes following reaction.

$$N_2 + O_2 \rightarrow 2NO - 43.2 \text{ Kcal}$$

This reaction normally occurs where temperature is high. Aforementioned NO which undergoes a non-equilibrium condition caused by the stroke where expanding combustion is exhausted to atmosphere to react on $O_2$ so as to yield $NO_2$. As regards the aforementioned fact that NOx is generated in the center of a combustion chamber, it is reported that the concentration of NO to be produced at the first stage of combustion is extremely high and the following stages of combustion are not the decisive factor to generate NO ("The Principles on Engine Planning for Automobile" Tokyo: Sankaido Publishing Co.). Furthermore, graphs and drawings released by Research Institute of General Motors, Co., U.S.A. shows that NO which is ignited to begin combustion at BTDA $7^o$ still retains a high temperature as well as a high pressure at ATDC $40^o$ (Cohlin Campbell "Sports Car: Its Theory and Design": 42 - 43. Translation by Yoshiaki Shinoda and Jiro Kashiwagi. Nikyosha Publishing Co.). In addition, the concentration of NOx to be exhausted from a rotary engine in which the position of the combustion chamber is altered as compared with that to be exhausted from a reciprocating engine. The phenomenon mentioned above results from the characteristics of a rotary engine where the combustion chamber rotates in a stroke of suction and compression to give rise to a turbulence that continues to exist during ignition as well as combustion, so that the flame is cooled down by means of cylinder and rotor.

In an ordinary carburetor, fuels tend to float in the air in the form of an extremely fine spray which flows into cylinder with air flow. But in the case where an engine load is small or an engine idles, fuel tends to run into an inlet manifold in the form of pure liquid. On the other hand, when an engine performs with a large amount of load or a fuel throttle, even a high temperature does not prevent a throttle plate from opening in full scale. Thus fuels to be supplied increase extremely. Sometimes, the amount of fuels to be supplied in the form of spray reaches as high as 60%. Consequently, the effect of a flash boiling that may occur as a liquid flows into a low-pressure inlet manifold does not prove itself substantially, resulting in unbalance of mixtured gas as well as incomplete combustion to generate a large amount of CO and HC. Furthermore, the above-mentioned Sankaido Article also states, in the case of a reciprocating engine, the swirl effect caused by compression of mixtured gas does not offer any noticeable result at an initial stage of combustion, whereas said effect brings about a noticeable result at a final stage of combustion.

SUMMARY OF THE INVENTION:

It is an object of the present invention to provide an air supply device for an internal combustion engine which is designed to maintain constantly an efficient fuel/

air ratio of mixtured gas regardless of a change in the altitude and give high output with minimum consumption of fuels, as well as to reduce the amount of NOx, CO, HC contained in the exhaust gas. The characteristic of this invention resides in that a first control valve to be controlled by atmospheric pressure and a second control valve to be controlled by the load of a carburetor are placed in series in an air path, the downstream terminal of said air path being connected to an inlet pipe which is located downstream from a carburetor of the internal combustion engine.

The structure of this invention mentioned above makes it possible to maintain a constantly optimum fuel/ air ratio in accordance with the number of revolution of the internal combustion engine regardless of a change in altitude; this results in an increase in output as well as reduction of fuel consumption.

At the same time, in the structure of this invention, an inlet manifold generates a stroke of inhalation, compression and explosion to cause a swirl in mixtured gas which works to improve the evaporation and combustion of fuels, as well as to enhance a greater uniformity of mixtured gas. Thus, NOx, CO and HC contained in exhausted gas can be reduced.

Furthermore, since an air supply device provided by this invention uses PCV line of the conventional internal

combustion engine to supply the air, it can be applied to almost all of the conventional internal combustion engine. In addition, PCV line can offer an appropriate angle at which secondary air is injected to the main mixtured gas, resulting in the generation of uniform mixtured gas. It should be noted that the injection of secondary air through a hole to boost measurement cannot get uniform mixtured gas.

BRIEF EXPLANATION OF ACCOMPANYING DRAWINGS:

Fig. 1 shows an exemplary embodiment of this invention;

Fig. 2 and Fig. 3 show the sectional drawings of a carburetor;

Fig. 4 shows a perspective drawing of an exemplary embodiment of this invention.

DESCRIPTION OF THE PREFERRED EMBODIMENT:

Hereinafter, an exemplary embodiment of the present invention will be explained with accompanying drawings. Referring to Fig. 1, an exemplary embodiment of this invention identified as an air supply device 1 comprises air cleaner 2, atmosphere chamber 4, aneroid chamber 6, first air chamber 8 (this embodiment prepares two first air chambers as shown in Fig. 1), suction chamber 10 and second air chamber 12. The atmosphere chamber 4, in order to inhale

purified air through the air cleaner 2, is connected to the first air chamber 8 through high-speed metering jet 16 which works as the first control valve to be controlled by the first diaphram 14 of the aneroid chamber 6. Aneroid chamber 6 is hermetically sealed by the first diaphram 14. Atmosphere chamber 4 and first air chamber 8 are connected by the high-speed metering jet 16 and high-speed adjuster 17 which works as first manual control valve. The air passing area of the high-speed metering jet 16 for connection with the air chamber 8 is adjusted by high-speed metering rod 20 mounted on lifter 18 that is an integral part of the operating body of the first diaphram. The area to be occupied by the high-speed adjuster 17 for connection with the first air chamber 8 is adjusted by first adjustment screw 21. Referring to Fig. 2 and Fig. 3, the suction chamoer 10 is connected to vacuum advance port 152 of carburetor 150 through signal connector 22. The suction chamber 10 is stopped by second diaphram 24 to make up the second control valve, and compression spring 28 is installed between the bottom 26 of the suction chamber 10 and the second diaphram 24. Since exhaust port 30 of the first air chamber 8 is substantially stopped by the second diaphram 24 and valve seat 25, decompression of the suction chamber 10 causes second diaphram 24 to travel toward the bottom 26 against the operation of compression spring 28,so that the exhaust port 30 begins to

expand the air passing area thereof in proportion to the pressure in the suction chamber 10. Thus, both of the first air chambers 8 are connected to the second air chamber 12. The atmosphere chamber 4 is also connected to both the second air chamber 12 through slow metering jet 32 which works as a third control valve and slow-speed adjuster 34 which works as the second manual control valve. Slow-speed metering rod 36 mounted on lifter 18 adjusts the area to be stopped by the slow metering jet 34 for connection with the second air chamber 12. Second adjustment screw 37 adjusts the area to be stopped by the slow-speed adjuster 34 for connection with the second air chamber 12. Cover 39 is installed to adjust the first adjustment screw 21 and the second adjustment screw 36 from outside. The second air chamber 12 is connected to referred to as (not shown in the accompanying drawings) through supply connecter 40. Referring to Fig. 1 and Fig. 3, the vacuum advance port 152 is placed in the path which locates itself slightly upstream from the center of rotation of butterfly 153. When the accelerator is stepped on to cause the butterfly 154 to rotate counterclockwise as shown in Fig. 3, the vacuum advance port 152 begins to located itself down-stream from the butterfly 154.

Fig. 4 shows the structure of the atmosphere chamber 4 which is composed of the high-speed metering jet 16, the high-speed adjuster 17, the slow metering jet

32 and the slow-speed adjuster 34. As shown in Fig. 4, the lifter support 52 and the valve seat member 54 are mounted on partition member 50 to separate the first air chamber 8 from the second air chamber 12. The first diaphram 14 is placed within the bottom 56 of the lifter support 52, and the upper part of rising member 58 of the lifter support 52 has lifter rod 60 which is installed so as to project from the top of the rising member 58. Vertical lifter rod 60 and V-shaped lifter plate 62 are incorporated to make up the structure of the lifter 18, and the high-speed metering rod 20 and the slow-speed metering rod 36 are mounted on each terminus of V-shaped lifter plate 62. On the other hand, the valve seat member 54, which is furnished with the high-speed metering rod 20 and the slow-speed metering rod 36, is further provided with the first adjustment screw 21 and the second adjustment screw 37. The high-speed adjuster 17 consists of the first adjustment screw 21 and a first compression spring 70 which is adapted to prevent the first adjustment screw 21 from becoming loose. The low-speed adjuster 34 consists of the second adjustment screw 37 and a second compression spring 72 which is adapted to prevent the second adjustment screw 37 from becoming loose.

In the structure mentioned above, when an engine either idles or decelerates, the butterfly 154 of the carburetor 150, as shown in Fig. 2, operates to close the

path where mixtured gas travels. Thus the pressure in the vacuum advance port 152, that is, the pressure in the suction chamber 10 tends to stand as high as atmospheric pressure, and the first air chamber 8 is cut off from the second air chamber 12 by the second diaphram 24. Consequently, the air which passes through the slow metering jet 32 that opens in accordance with the range of altitude, that is, atmospheric pressure, and the slow-speed adjuster 34 that opens in accordance with a desired area to be occupied for connection, is forwarded to the intake manifold through the supply connecter and the PCV line.

On the other hand, when an engine is either accelerated or is operated at high speed, the butterfly 154 of the carburetor begins to move counterclockwise, as shown in Fig. 3, to locate itself upstream from the vacuum advance port 152. Thus the amount of pressure in the vacuum advance port 152, that is, the amount of pressure in the suction chamber 10, approaches the amount of boost pressure in the intake manifold. In this way, the second diaphram 24 begins to lower against the operation of compression spring 28, resulting in the creation of a space between the second diaphram 24 and the valve seat 25 to connect the first air chamber 8 with the second air chamber 12. The air passes through the slow-speed metering jet 32 that opens in accordance with the range of

altitude, namely atmospheric pressure, and the slow-speed adjuster 34 that opens in accordance with a desired area to be occupied for connection. The air also passes through the high-speed metering jet 16 that opens in accordance with the range of altitude, namely,atmospheric pressure, and the high-speed adjuster 17 that opens in accordance with a desired area to be occupied for connections and further the space between the second diaphram 24 and the valve seat 25, so that the air is forwarded to the intake manifold through the supply connecter 40 and the PCV line.

In the structure mentioned above, the high-speed metering jet 16 and the slow-speed metering jet 32 are designed in accordance with the following table so that they can supply the air which matches ranges of the sea level to be selected.

| | High-speed metering jet (2000 rpm) | | Low-speed metering jet (650 rpm) | |
|---|---|---|---|---|
| Sea level (m) | Area for connection ($mm^2$) | Air to be supplied (l/min) | Area for connection ($mm^2$) | Air to be supplied (l/min) |
| 0 | 0 | 0 | 0 | 0 |
| 600 | 0.55 | 30.0 | 0.72 | 2.0 |
| 1,200 | 1.25 | 40.0 | 0.87 | 2.4 |
| 1,800 | 1.95 | 45.0 | 1.04 | 2.7 |
| 2,400 | 2.65 | 50.0 | 1.20 | 3.0 |

Next, in the structure mentioned above, an air supply device for an internal combustion engine is adjusted as follows:

First of all, the air supply device 1 is placed on the engine block in the engine room almost in a vertical position and the engine is warmed up. It is to be understood that the device may be placed anywhere in the engine room, the only requirement being that the device is oriented in a generally vertical position. Then, a tachometer and an exhaust gas analyzer are employed to measure and record the engine speed when idling and the concentration of exhaust gas..

Example:

| | |
|---|---|
| Engine speed | 650 rpm |
| Concentration of CO | 4.0 % |
| Concentration of HC | 800 ppm |

Next, the engine speed is set at 2000 rpm to measure the concentration of exhaust gas.

Example:

| | |
|---|---|
| Engine speed | 2,000 rpm |
| Concentration of CO | 0.6 % |
| Concentration of HC | 150 ppm |

Afterwards, a supply connecter of air supply device 1 is connected to the line through a three-way pipe, and the second adjustment screw 37 of the slow-speed adjuster 34 is revolved so as to get minimum

measurements of CO and HC to be exhausted by putting the engine in the idling position. In the operation mentioned above, the engine speed is adjusted by an idle adjuster. Since the adjustment of the idle adjuster results in different measurements of CO and HC, which are exhaused, the adjustment by the use of the second adjustment screw 37 after the engine speed is in the idling position is repeated. Next, the signal connector 22 is connected to the vacuum advance port 152 and the number of revolutions of first adjustment screw 21 of high-speed adjuster 17 is adjusted to obtain minimum measurements of CO and HC to be exhausted with the speed of the engine is set at 2,000 rpm.

Example:

| | |
|---|---|
| Engine speed | 2,000 rpm |
| Concentration of CO | 0.2 % |
| Concentration of HC | 100 ppm |

The following table shows the result of an experiment where an air supply device provided by this invention is applied to a 4-chcle, 8-cylindered engine with gross engine displacement of 7539 cc. The comparative measurements of the table are based on 10 mode.

| | Without an air supply device | With an air supply device | Ratio of increase and decrease |
|---|---|---|---|
| CO | 107.65 g/bn | 45.27 g/bn | -57.9% |
| HC | 3.72 g/bn | 1.56 g/bn | -58.0% |
| NOx | 4.72 g/bn | 3.38 g/bn | -28.3% |
| $CO_2$ | 653.9 g/bn | 651.8 g/bn | - 0.3% |
| Ratio of fuels to be consumed | 2.8 bn/l | 3.3 bn/l | 17.8% |

The following table shows the comparative measurements resulting from an experiment where an air supply device provided by this invention is placed at various-ranges of sea level.

| Sea level m | Engine Speed rpm | Without an air supply device | | With an air supply device | |
|---|---|---|---|---|---|
| | | CO(%) | HC(ppm) | CO(%) | HC(ppm) |
| 0 | 650 | 2.2 | 80 | | |
| | 2,000 | 1.2 | 30 | | |
| 850 | 650 | 2.9 | 120 | 2.2 | 130 |
| | 2,000 | 2.0 | 65 | 1.35 | 55 |
| 1,300 | 650 | 2.9 | 130 | 2.2 | 140 |
| | 2,000 | 2.8 | 80 | 1.4 | 55 |
| 1,600 | 650 | 3.1 | 140 | 2.2 | 155 |
| | 2,000 | 3.0 | 95 | 1.2 | 70 |
| 2,000 | 650 | 3.1 | 160 | 2.2 | 170 |
| | 2,000 | 3.2 | 100 | 1.35 | 70 |
| 2,300 | 650 | 3.2 | 180 | 2.3 | 180 |
| | 2,000 | 3.6 | 110 | 1.4 | 80 |

CLAIMS:

1. An air supply device for an internal combustion engine having a carburetor and an inlet pipe, said device comprising a first control valve to be controlled by atmospheric pressure and a second control valve to be controlled by the load of an engine; said two valves being placed in an air path in series and the downstream terminal of said air path being connected to an inlet pipe located downstream from the carburetor of the internal combustion engine.

2. An air supply device for an internal combustion engine as specified in claim 1, further comprising a first manual control valve placed in parallel with said first control valve in said air path.

3. An air supply device for an internal combustion engine as specified in claim 1, in which the sownstream terminal of said air path is connected to the inlet pipe located downstream from the carburetor of the internal combustion engine through a PCV line.

4. An air supply device for an internal combustion engine as specified in claim 1, in which a third control valve to be controlled by atmospheric pressure is placed in parallel with said first control valve and said second control valve in said air path.

5. An air supply device for an internal combustion

engine as specified in claim 1, in which a second manual control valve is placed in parallel with said second control valve in said air path.

FIG. 1

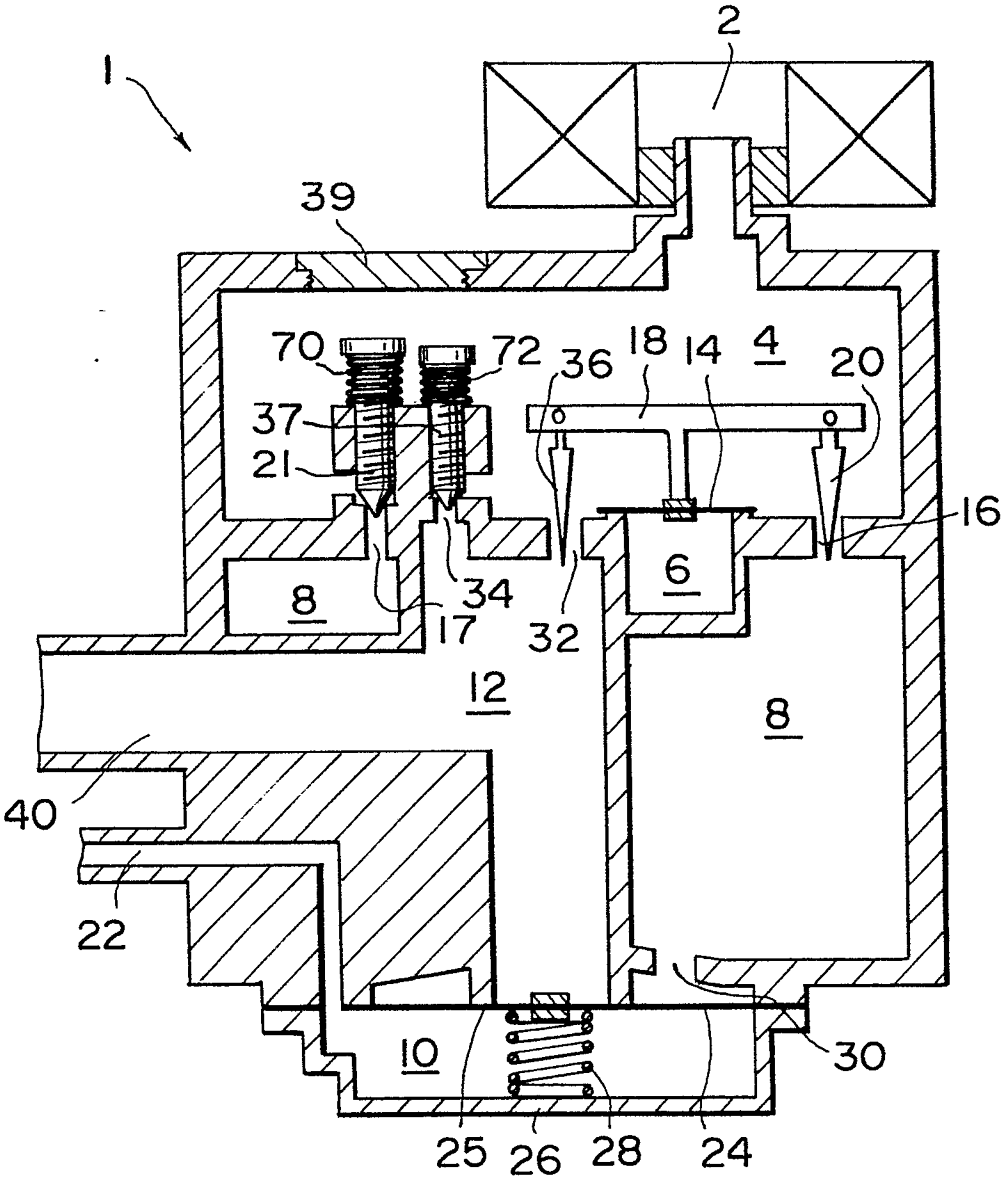
1
2
39
70
72
36
18
14
4
20
37
21
16
6
8
34
17
32
12
8
40
22
10
30
25
26
28
24

FIG.2

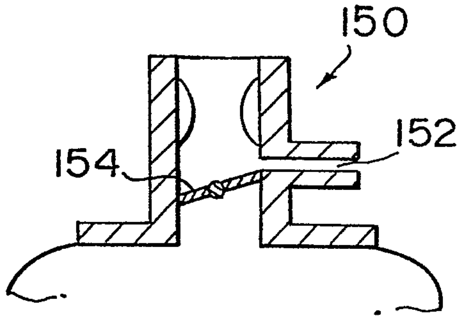


FIG.3

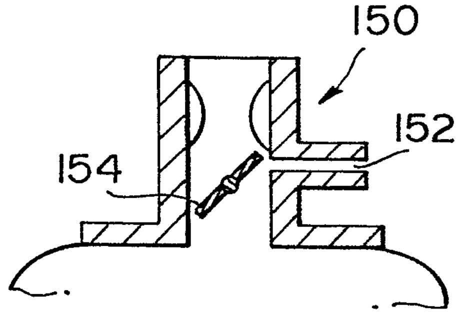


FIG.4

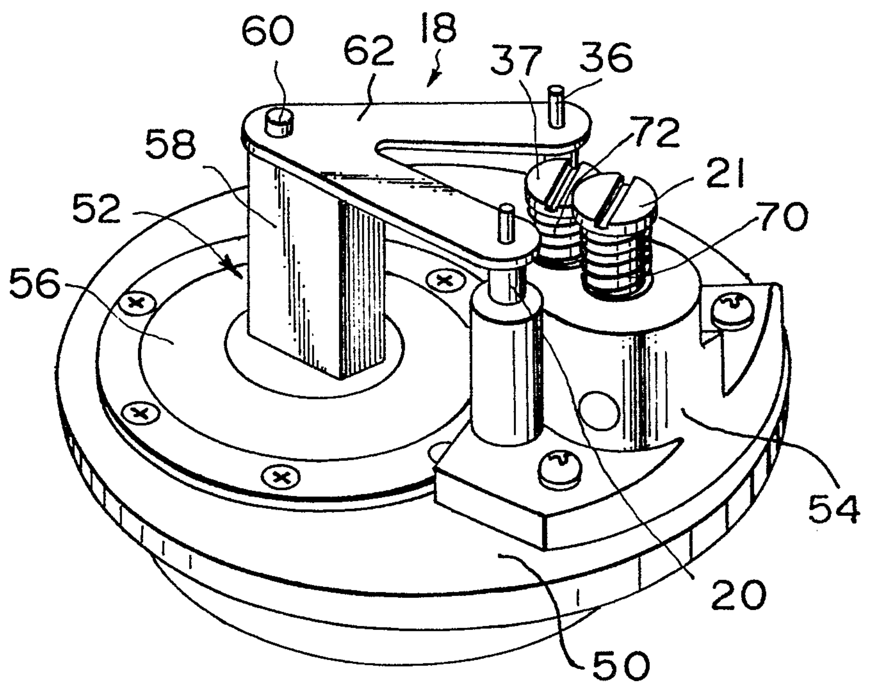

# INTERNATIONAL SEARCH REPORT

**0100365**

International Application No PCT/JP82/00036

## I. CLASSIFICATION OF SUBJECT MATTER (if several classification symbols apply, indicate all) [3]

According to International Patent Classification (IPC) or to both National Classification and IPC

Int. Cl.$^{3}$ F02M23/04, 23/08

## II. FIELDS SEARCHED

Minimum Documentation Searched [4]

| Classification System | Classification Symbols |
|---|---|
| I P C | F02M 23/00 - 23/04, 23/08 |

Documentation Searched other than Minimum Documentation to the Extent that such Documents are Included in the Fields Searched [5]

| | |
|---|---|
| Jitsuyo Shinan Koho | 1939 - 1982 |
| Kokai Jitsuyo Shinan Koho | 1971 - 1982 |

## III. DOCUMENTS CONSIDERED TO BE RELEVANT [14]

| Category * | Citation of Document, [16] with indication, where appropriate, of the relevant passages [17] | Relevant to Claim No. [18] |
|---|---|---|
| X,Y | JP,Y2, 56-30679 (Toyo Kogyo Co., Ltd.) 21. July. 1981 (21.7.81), Column 3, lines 1 to 44 | 1, 2, 3, 5 |
| Y | JP,U, 49-100024 (Toyo Kogyo Co., Ltd.), 28. August. 1974 (28.8.74), Fig. 2 | 2, 5 |
| Y | JP,B2, 55-8666 (Granco Inc.), 5. March. 1980 (5.3.80), Column 3, lines 22 to 31 & DE, A, 2353925 & FR, B, 2205106 & CA, A, 974832 & SE, B, 404068 | 3 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [2] | Date of Mailing of this International Search Report [2] |
|---|---|
| April 28, 1982 (28.04.82) | May 10, 1982 (10.05.82) |
| **International Searching Authority [1]** | **Signature of Authorized Officer [20]** |
| Japanese Patent Office | |